# EUROPEAN PATENT APPLICATION

(11) **EP 3 363 633 A1**
(43) Date of publication of application: **22.08.2018**
(21) Application number: 15906024.3
(22) Date of filing: 13.10.2015
(51) Int. Cl.: B32B 37/02

(54) **HEAT PRESERVATION PAPERBOARD COMPOSITING MACHINE AND COMPOSITING METHOD, AND HEAT PRESERVATION PAPERBOARD MANUFACTURING SYSTEM**

(71) Applicant: Lau, Chi-Wah, Hong Kong (CN)
(72) Inventor: Lau, Chi-Wah, Hong Kong (CN)
(74) Representative: Karakatsanis, Georgios
(86) International application number: PCT/CN2015/091838
(87) International publication number: WO 2017/063139

(57) **Abstract**

A laminating machine, laminating method, and manufacturing system for heat-insulating cardboard are provided, featuring a high degree of automation to increase manufacture efficiency. The laminating machine includes: an adhesive-applying mechanism (1) having a cardboard-pressing roller (11) and a first adhesive-applying roller (12) that are vertically aligned and form a gap therebetween through which cardboard (10) can be friction-fed; and a laminating section (2) downstream of the adhesive-applying mechanism (1) and having upper and lower pressure rollers (21, 22) that are vertically aligned and form a gap therebetween through which the cardboard (10) can be friction-fed, with a second adhesive-applying roller (23) provided near the lower end of the lower pressure roller (22) and forming a gap therewith through which a heat-insulating material (20) can be friction-fed in order to be rolled onto and adhesively bonded to the lower surface of the cardboard (10) by the lower pressure roller (22).

## Description

### FIELD OF THE INVENTION

The present invention relates to a method and apparatus for manufacturing heat-insulating cardboard and more particularly to a heat-insulating cardboard laminating machine, laminating method, and manufacturing system for use in the technical field of packaging.

### BACKGROUND OF THE INVENTION

Nowadays, marine products such as seafood are typically transported in cardboard boxes. To ensure that boxed marine products can be transported over long distances and stay fresh, the cardboard boxes used must provide certain heat insulation and be waterproof to some extent, given that liquids are sure to be found on the surface of seafood.

To waterproof a cardboard box, it is common practice to coat each of its cardboard components with liquid wax, which forms a wax layer capable of isolating the surface liquids of marine products from the cardboard itself. Waxed cardboard, however, does not insulate heat, so the resulting cardboard boxes are not effective in keeping marine products fresh. Moreover, as liquid wax generally covers the cardboard surface alone, leaving the cardboard edges uncoated, the surface liquids of a marine product stored in a waxed cardboard box may seep into the cardboard through the uncoated edges, thereby wetting the cardboard and reducing its structural strength; in other words, waxed cardboard boxes are still permeable to water and hence prone to break when wet.

### BRIEF SUMMARY OF THE INVENTION

One objective of the present invention is to provide a heat-insulating cardboard laminating machine for laminating cardboard and a heat-insulating material together in a highly automated manner so as to increase manufacture efficiency effectively.

Another objective of the present invention is to provide a heat-insulating cardboard laminating method for laminating cardboard and a heat-insulating material together in a highly automated manner so as to increase manufacture efficiency effectively.

Yet another objective of the present invention is to provide a heat-insulating cardboard manufacturing system that laminates cardboard and a heat-insulating material together in a highly automated manner and that therefore can increase manufacture efficiency effectively.

The foregoing objectives can be achieved by the following technical solutions:

The present invention provides a heat-insulating cardboard laminating machine that includes an adhesive-applying mechanism and a laminating section.

The adhesive-applying mechanism has a cardboard-pressing roller and a first adhesive-applying roller that is vertically aligned with the cardboard-pressing roller. The cardboard-pressing roller and the first adhesive-applying roller form a gap therebetween, and cardboard can be transported through the gap by friction between the cardboard and the cardboard-pressing roller and friction between the cardboard and the first adhesive-applying roller.

The laminating section is located downstream of the adhesive-applying mechanism and has an upper pressure roller and a lower pressure roller that is vertically aligned with the upper pressure roller. The upper pressure roller and the lower pressure roller are horizontally aligned with the cardboard-pressing roller and the first adhesive-applying roller respectively. A second adhesive-applying roller is provided near the lower end of the lower pressure roller. The upper pressure roller and the lower pressure roller form a gap therebetween, and the cardboard can be transported through the gap by friction between the cardboard and the upper pressure roller and friction between the cardboard and the lower pressure roller. The lower pressure roller and the second adhesive-applying roller also form a gap therebetween, and a heat-insulating material can be transported through the gap by friction between the heat-insulating material and the lower pressure roller and friction between the heat-insulating material and the second adhesive-applying roller. The heat-insulating material is rolled onto and adhesively bonded to the lower surface of the cardboard by the lower pressure roller.

Preferably, the laminating section further has an upper worm-wheel lifting mechanism. The upper worm-wheel lifting mechanism is connected to the upper pressure roller and includes a vertical threaded rod and an upper horizontal threaded rod.

The vertical threaded rod has an upper worm wheel rotatably connected thereto and penetrates two upper bearing blocks that are connected to each other. The upper worm wheel is located between the two upper bearing blocks. The upper pressure roller has an end portion connected to the two upper bearing blocks.

The upper horizontal threaded rod is provided on one side of the upper worm wheel and is connected with the upper worm wheel to enable power transmission between the upper horizontal threaded rod and the upper worm wheel. The upper worm wheel can move the two upper bearing blocks vertically along the vertical threaded rod according to rotation of the upper horizontal threaded rod.

Preferably, the lower pressure roller is connected with a lower worm-wheel lifting mechanism at one end. The lower worm-wheel lifting mechanism is located below the upper worm-wheel lifting mechanism and includes a lower worm wheel and a lower horizontal threaded rod.

The lower worm wheel is rotatably connected to the vertical threaded rod. The vertical threaded rod further penetrates two lower bearing blocks that are connected to each other. The lower worm wheel is located between the two lower bearing blocks. The lower pressure roller has an end portion connected to the two lower bearing blocks.

The lower horizontal threaded rod is provided on one side of the lower worm wheel and is connected with the lower worm wheel to enable power transmission between the lower horizontal threaded rod and the lower worm wheel. The lower worm wheel can move the two lower bearing blocks vertically along the vertical threaded rod according to rotation of the lower horizontal threaded rod.

Preferably, a first adhesive trough is provided below the first adhesive-applying roller, and the first adhesive trough contains liquid adhesive.

Preferably, a second adhesive trough is provided below the second adhesive-applying roller, and the second adhesive trough contains hot melt adhesive.

Preferably, an electric heater is provided below the second adhesive trough, and the second adhesive trough is surrounded by a heat-conducting oil. The electric heater heats the hot melt adhesive in the second adhesive trough at 70°C∼200°C through the heat-conducting oil.

Preferably, the heat-insulating material is coated with a layer of hot melt adhesive by the second adhesive-applying roller, wherein the layer of hot melt adhesive is 0.01 mm∼0.03 mm thick.

Preferably, the heat-insulating cardboard laminating machine further includes a cutting mechanism. The cutting mechanism is located downstream of the laminating section and has a pressing block and a cutting knife. The pressing block is configured to be pressed on the upper surface of the cardboard. The cutting knife is provided below the heat-insulating material and cuts the heat-insulating material and the cardboard in a direction perpendicular to the moving direction of the cardboard according to horizontal movement of the cardboard.

Preferably, the cutting mechanism further includes a vertically movable tearing roller located downstream of the pressing block. Once the cutting knife cuts the heat-insulating material and the cardboard, the tearing roller is pressed on the upper surface of the cardboard.

Preferably, a photoelectric sensor is provided downstream of the cutting mechanism.

Preferably, the heat-insulating cardboard laminating machine further includes a cardboard transport section. The cardboard transport section is provided upstream of the adhesive-applying mechanism and has a transport mechanism. The transport mechanism has an upper transport belt and a lower transport belt that is vertically aligned with the upper transport belt. The upper transport belt and the lower transport belt form a gap therebetween, and the cardboard can be transported through the gap by friction between the cardboard and the upper transport belt and friction between the cardboard and the lower transport belt.

Preferably, the heat-insulating cardboard laminating machine further includes a heat-insulating material reel rack provided upstream of the adhesive-applying mechanism. The heat-insulating material reel rack has a vertical stand. A horizontal frame is rotatably connected to the upper end of the vertical stand. A heat-insulating material reel is rotatably connected to each of two opposite ends of the horizontal frame. The heat-insulating material is wound around each of the heat-insulating material reels, is released from the heat-insulating material reel in use, and is transported via a plurality of rollers into the gap between the lower pressure roller and the second adhesive-applying roller in the laminating section.

The present invention also provides a heat-insulating cardboard manufacturing system that includes the foregoing heat-insulating cardboard laminating machine.

Preferably, the heat-insulating cardboard manufacturing system further includes a coating machine. The coating machine is provided downstream of the heat-insulating cardboard laminating machine and includes cardboard conveying mechanism and a wax dispenser.

The cardboard conveying mechanism has a front end and a back end, wherein the front end is lower than the back end. The laminated assembly of the cardboard and the heat-insulating material is placed on the cardboard conveying mechanism.

The wax dispenser is provided above the back end and is provided with a wax dispensing roller on each of two lateral sides of the wax dispenser.

Preferably, each of the wax dispensing rollers includes a roller body and a felt sleeve.

Each roller body has a hollow chamber in communication with the wax dispenser through a connecting tube and is provided with a plurality of through holes in communication with the hollow chamber.

Each felt sleeve is mounted around the corresponding roller body.

Preferably, the coating machine further includes a wax trough below the wax dispenser and the two wax dispensing rollers.

Preferably, the back end of the cardboard conveying mechanism is provided with a transport mechanism that includes a front-end transport wheel, a middle transport wheel, and a rear-end transport wheel. Both the front-end transport wheel and the rear-end transport wheel are lower than the middle transport wheel. A first transport belt is looped around the front-end transport wheel and the middle transport wheel while a second transport belt is looped around the middle transport wheel and the rear-end transport wheel.

Preferably, the rear-end transport wheel is lower than the front-end transport wheel.

Preferably, the coating machine further includes a wax reservoir for storing liquid wax. The wax reservoir is connected to the wax dispenser through a pump and is below the wax trough.

The present invention also provides a heat-insulating cardboard laminating method that includes the steps of:
a) providing cardboard, and applying adhesive to the lower surface of the cardboard; and
b) providing a heat-insulating material, and bonding the heat-insulating material to the lower surface of the cardboard adhesively.

Preferably, step b further includes applying adhesive to the surface of the heat-insulating material that is to be adhesively bonded to the lower surface of the cardboard.

Preferably, the cardboard is 0.3 mm∼9 mm thick.

Preferably, the heat-insulating material is 1 mm∼6 mm thick.

Preferably, the adhesive applied to the lower surface of the cardboard in step a is 0.01 mm∼0.15 mm thick.

Preferably, the adhesive applied to the surface of the heat-insulating material is 0.01 mm∼0.03 mm thick.

Preferably, the adhesive applied to the lower surface of the cardboard is liquid adhesive or hot melt adhesive.

Preferably, the adhesive applied to the surface of the heat-insulating material is liquid adhesive or hot melt adhesive, and the adhesive applied to the lower surface of the cardboard is liquid adhesive or hot melt adhesive.

The present invention has the following features and advantages:
1. The heat-insulating cardboard laminating machine of the present invention serves to laminate cardboard and a heat-insulating material together and is highly automated to increase manufacture efficiency effectively. Moreover, the resulting heat-insulating cardboard has high quality and a high yield.
2. The heat-insulating cardboard manufacturing system of the present invention serves to manufacture heat-insulating cardboard and coat the heat-insulating cardboard with wax. Waxed heat-insulating cardboard made by the heat-insulating cardboard manufacturing system can be made into cardboard boxes for storing marine products and keeping the stored products fresh and safe from deterioration. These cardboard boxes are highly waterproof and are therefore expected to have long service lives.
3. The heat-insulating cardboard laminating method of the present invention adhesively bonds, and thereby effectively laminates, cardboard and a heat-insulating material together by applying adhesive to the cardboard and/or the heat-insulating material. The resulting heat-insulating cardboard has high quality and can be used to make cardboard boxes capable of insulating heat from the boxed marine products and thus protecting the boxed marine products from deterioration.

### BRIEF DESCRIPTION OF THE SEVERAL VIEWS OF THE DRAWINGS

To expound the technical solutions provided by embodiments of the present invention, a brief description of the accompanying drawings, to which the following embodiments refer, is given below. It is understood that the accompanying drawings show only some embodiments of the invention, and that a person of ordinary skill in the art may derive other drawings from the accompanying ones without creative labor.
FIG. 1 schematically shows the structure of a heat-insulating cardboard laminating machine according to the present invention.
FIG. 2 schematically shows the structures of the laminating section and of the adhesive-applying mechanism of the heat-insulating cardboard laminating machine in FIG. 1.
FIG. 3 schematically shows the structures of the upper worm-wheel lifting mechanism and of the lower worm-wheel lifting mechanism of the heat-insulating cardboard laminating machine in FIG. 1.
FIG. 4 schematically shows the structure of the cutting mechanism of the heat-insulating cardboard laminating machine in FIG. 1.
FIG. 5 schematically shows the structure of the cardboard transport section of the heat-insulating cardboard laminating machine in FIG. 1.
FIG. 6 schematically shows the structure of the heat-insulating material reel rack of the heat-insulating cardboard laminating machine in FIG. 1.
FIG. 7 schematically shows the structure of the coating machine of a heat-insulating cardboard manufacturing system according to the present invention.
FIG. 8 schematically shows the structure of a wax dispensing roller of the coating machine in FIG. 7.

### DETAILED DESCRIPTION OF THE INVENTION

The technical solutions provided by embodiments of the present invention are detailed below with reference to the accompanying drawings. It is understood that the embodiments described herein are only some illustrative ones, and do not include all the possible embodiments, of the invention. All other embodiments achievable by a person of ordinary skill in the art without creative labor should fall within the scope of patent protection sought by the present applicant.

### Embodiment 1

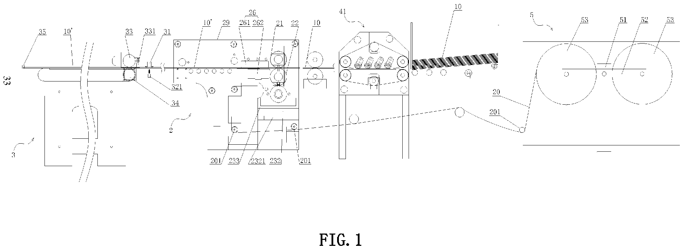

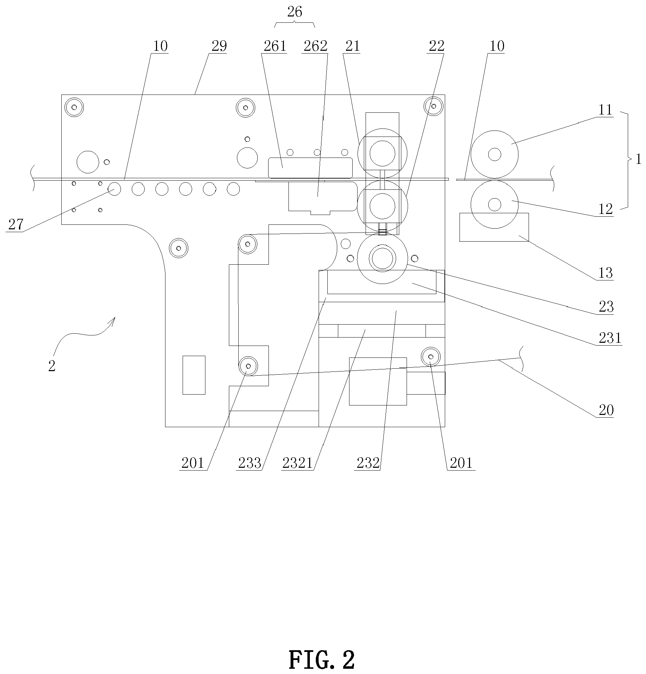

Referring to FIG. 1 and FIG. 2, the present invention provides a heat-insulating cardboard laminating machine that includes an adhesive-applying mechanism 1 and a laminating section 2. The adhesive-applying mechanism 1 has a cardboard-pressing roller 11 and a first adhesive-applying roller 12 that are vertically aligned. Cardboard 10 can be transported through the gap between the cardboard-pressing roller 11 and the first adhesive-applying roller 12 by friction with the cardboard-pressing roller 11 and with the first adhesive-applying roller 12. The laminating section 2 is located downstream of the adhesive-applying mechanism 1 and has an upper pressure roller 21 and a lower pressure roller 22 that are vertically aligned. The upper pressure roller 21 and the lower pressure roller 22 are horizontally aligned with the cardboard-pressing roller 11 and the first adhesive-applying roller 12 respectively. A second adhesive-applying roller 23 is provided adjacent to the lower end of the lower pressure roller 22. The cardboard 10 can be transported through the gap between the upper pressure roller 21 and the lower pressure roller 22 by friction with the upper pressure roller 21 and with the lower pressure roller 22, and a heat-insulating material 20 can be transported through the gap between the lower pressure roller 22 and the second adhesive-applying roller 23 by friction with the lower pressure roller 22 and with the second adhesive-applying roller 23. The heat-insulating material 20 is rolled onto and adhesively bonded to the lower surface of the cardboard 10 by the lower pressure roller 22.

More specifically, the cardboard-pressing roller 11 and the first adhesive-applying roller 12 of the adhesive-applying mechanism 1 are vertically aligned and are spaced apart by a gap. The cardboard-pressing roller 11 and the first adhesive-applying roller 12 roll in opposite directions respectively in order to pass the cardboard 10 through the gap therebetween. The cardboard 10 in the present invention may be a single- or multi-ply composite cardboard having a thickness ranging from 0.3 mm to 9 mm; the invention has no limitation in this regard. In this embodiment, a first adhesive trough 13 is provided below the first adhesive-applying roller 12 and contains liquid adhesive. The liquid adhesive in the first adhesive trough 13 adhesively attaches to the surface of the first adhesive-applying roller 12 as the first adhesive-applying roller 12 rotates. When the cardboard 10 passes through the gap between the cardboard-pressing roller 11 and the first adhesive-applying roller 12, the first adhesive-applying roller 12 applies liquid adhesive to the lower surface of the cardboard 10. In another embodiment of the present invention, the first adhesive trough 13 contains hot melt adhesive instead, and the hot melt adhesive is heated through the first adhesive trough 13 in order to be melted and then applied to the lower surface of the cardboard 10 through the first adhesive-applying roller 12.

In one embodiment of the present invention, the layer of liquid adhesive applied over the cardboard 10 by the first adhesive-applying roller 12 has a thickness of 0.01 mm∼0.15 mm.

The laminating section 2 is a device for laminating the heat-insulting material 20 and the cardboard 10 together and has a housing 29. The upper pressure roller 21 and the lower pressure roller 22 are located in the housing 29, are spaced apart by a gap, and roll in opposite directions respectively. Once having its lower surface coated with liquid adhesive, the cardboard 10 is fed from between the cardboard-pressing roller 11 and the first adhesive-applying roller 12 into the laminating section 2 through the gap between the upper pressure roller 21 and the lower pressure roller 22.

The second adhesive-applying roller 23 is provided below the lower pressure roller 22 and is located in the housing 29. The lower pressure roller 22 and the second adhesive-applying roller 23 roll in opposite directions respectively in order to pass the heat-insulating material 20 through the gap therebetween. The heat-insulating material 20 in the present invention has a thickness of 1 mm∼6 mm. In this embodiment, a second adhesive trough 231 is provided below the second adhesive-applying roller 23 and contains hot melt adhesive. Furthermore, an electric heater 232 is provided below the second adhesive trough 231 and is connected to the inner wall of the housing 29 via a support 2321, and the second adhesive trough 231 is surrounded by a heat-conducting oil 233 in order for the electric heater 232 to heat the hot melt adhesive in the second adhesive trough 231 through the heat-conducting oil 233. In this embodiment, the hot melt adhesive is heated at 70°C∼200°C. In other embodiments, it is understood that the second adhesive trough 231 may contain liquid adhesive instead, and in that case, the electric heater 232 below the second adhesive trough 231 and the heat-conducting oil 233 will be dispensed with. According to the present invention, the hot melt adhesive or liquid adhesive in the second adhesive trough 231 adhesively attaches to the surface of the second adhesive-applying roller 23 as the second adhesive-applying roller 23 rotates. When the heat-insulating material 20 passes through the gap between the lower pressure roller 22 and the second adhesive-applying roller 23, the second adhesive-applying roller 23 applies hot melt adhesive or liquid adhesive to a surface of the heat-insulating material 20.

In one embodiment of the present invention, the layer of hot melt adhesive applied over the heat-insulating material 20 by the second adhesive-applying roller 23 has a thickness of 0.01 mm∼0.03 mm.

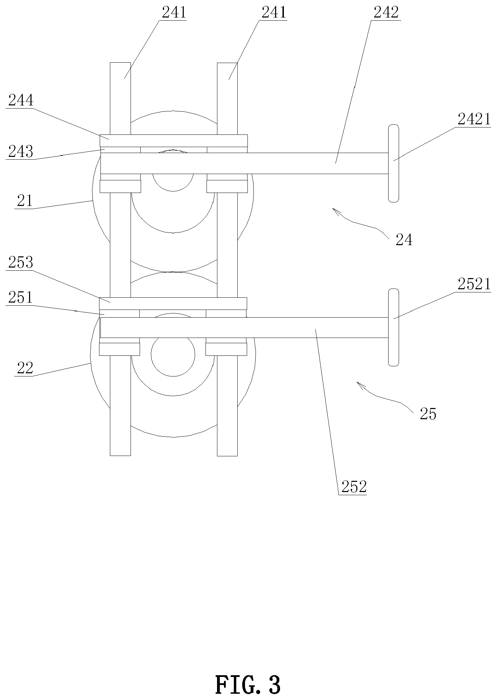

According to one embodiment of the present invention as shown in FIG. 3, the laminating section 2 further has an upper worm-wheel lifting mechanism 24. The upper worm-wheel lifting mechanism 24 is connected to the upper pressure roller 21 and includes at least one vertical threaded rod 241 and an upper horizontal threaded rod 242. In this embodiment, there are two vertical threaded rods 241 arranged side by side at an end portion of the upper pressure roller 21. Two upper worm wheels 243 are rotatably connected to the vertical threaded rods 241 respectively, and two connected upper bearing blocks 244 are axially movably penetrated by the vertical threaded rods 241. The upper worm wheels 243 lie between the two upper bearing blocks 244. The end portion of the upper pressure roller 21 is connected to the two upper bearing blocks 244. The upper horizontal threaded rod 242 is provided on one side of the upper worm wheels 243 and is connected to the upper worm wheels 243 to enable power transmission therebetween. A handwheel 2421 is connected to an end portion of the upper horizontal threaded rod 242. By rotating the handwheel 2421, the upper horizontal threaded rod 242 is driven to rotate and thereby drives the upper worm wheels 243 into rotation and consequently vertical movement with respect to the vertical threaded rods 241. When moved upward with respect to the vertical threaded rods 241, the upper worm wheels 243 push the upper bearing block 244 above them upward along the vertical threaded rods 241; as a result, the two upper bearing blocks 244 move the upper pressure roller 21 upward and thereby reduce the rolling pressure applied by the upper pressure roller 21 to the cardboard 10. When moved downward with respect to the vertical threaded rods 241, the upper worm wheels 243 push the upper bearing block 244 beneath them downward along the vertical threaded rods 241; as a result, the two upper bearing blocks 244 move the upper pressure roller 21 downward and thereby increase the rolling pressure applied by the upper pressure roller 21 to the cardboard 10. The upper worm-wheel lifting mechanism 24 in the present invention serves to adjust the rolling pressure of the upper pressure roller 21 so that a proper rolling pressure can be selected according to the thickness of the cardboard 10 in order to laminate the cardboard 10 and the heat-insulating material 20 together by rolling and to enhance the quality of the heat-insulating cardboard 10' formed by laminating the cardboard 10 and the heat-insulating material 20 together.

In one embodiment of the present invention, the lower pressure roller 22 is further connected with a lower worm-wheel lifting mechanism 25 at one end. The lower worm-wheel lifting mechanism 25 is located below the upper worm-wheel lifting mechanism 24 and includes two lower worm wheels 251 and a lower horizontal threaded rod 252. In this embodiment, the lower worm wheels 251 are rotatably connected to the two vertical threaded rods 241 respectively, and the vertical threaded rods 241 further penetrate two connected lower bearing blocks 253. The lower worm wheels 251 lie between the two lower bearing blocks 253. The end portion of the lower pressure roller 22 is connected to the two lower bearing blocks 253. The lower horizontal threaded rod 252 is provided on one side of the lower worm wheels 251 and is connected to the lower worm wheels 251 to enable power transmission therebetween. A handwheel 2521 is connected to an end portion of the lower horizontal threaded rod 252. By rotating the handwheel 2521, the lower horizontal threaded rod 252 is driven to rotate and thereby drives the lower worm wheels 251 into rotation and consequently vertical movement with respect to the vertical threaded rods 241. When moved upward with respect to the vertical threaded rods 241, the lower worm wheels 251 push the lower bearing block 253 above them upward along the vertical threaded rods 241; as a result, the two lower bearing blocks 253 move the lower pressure roller 22 upward and thereby increase the rolling pressure applied by the lower pressure roller 22 to the cardboard 10. When moved downward with respect to the vertical threaded rods 241, the lower worm wheels 251 push the lower bearing block 253 beneath them downward along the vertical threaded rods 241; as a result, the two lower bearing blocks 253 move the lower pressure roller 22 downward and thereby reduce the rolling pressure applied by the lower pressure roller 22 to the cardboard 10. The lower worm-wheel lifting mechanism 25 in the present invention serves to adjust the rolling pressure of the lower pressure roller 22 so that a proper rolling pressure can be selected according to the thickness of the cardboard 10 in order to laminate the cardboard 10 and the heat-insulating material 20 together by rolling and to enhance the quality of the heat-insulating cardboard 10' formed by laminating the cardboard 10 and the heat-insulating material 20 together.

The laminating section 2 further has a compressing mechanism 26 located downstream of the upper pressure roller 21 and the lower pressure roller 22. The compressing mechanism 26 consists of an upper compressing plate 261 and a lower compressing plate 262 that are vertically aligned. The upper compressing plate 261 and the lower compressing plate 262 are used to compress the adhesively bonded assembly of the cardboard 10 and the heat-insulating material 20 and thereby strengthen the adhesive bond therebetween. The compression pressure between the upper compressing plate 261 and the lower compressing plate 262 is the lowest pressure that can drive the heat-insulating material 20 forward; the present invention has no limitation on the value of this pressure.

In one embodiment of the present invention, a plurality of transport rollers 27 are provided downstream of the compressing mechanism 26 in order to convey the heat-insulating cardboard 10' formed by laminating the heat-insulating material 20 and the cardboard 10 together.

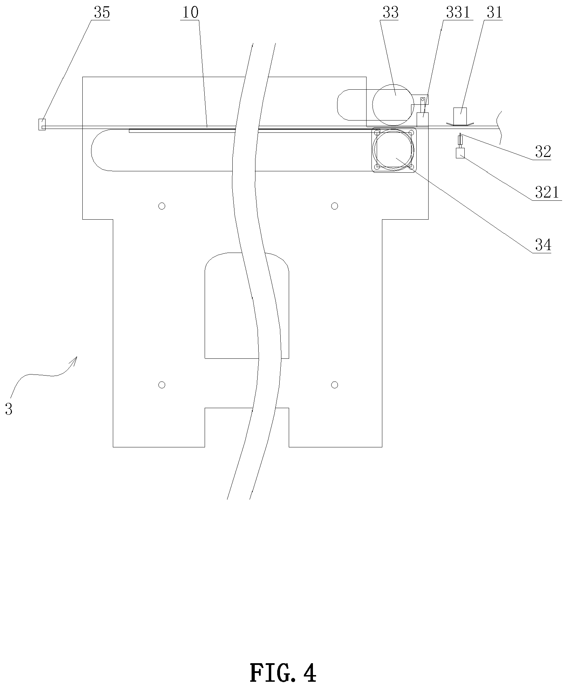

In one embodiment of the present invention as shown in FIG. 4, the heat-insulating cardboard laminating machine further includes a cutting mechanism 3. The cutting mechanism 3 is located downstream of the laminating section 2 and has a pressing block 31 and a cutting knife 32. The pressing block 31 is configured to be pressed on the upper surface of the cardboard 10 to which the heat-insulating material 20 has been adhesively bonded. The cutting knife 32 is provided below the heat-insulating material 20 and is connected with an electromagnet 321, which moves the cutting knife 32 up and down to cut the laminated assembly of the cardboard 10 and the heat-insulating material 20. In the present invention, the cutting knife 32 cuts the laminated assembly of the cardboard 10 and the heat-insulating material 20 in a direction perpendicular to the moving direction of the cardboard 10 according to horizontal movement of the cardboard 10. More specifically, when the heat-insulating cardboard 10' formed by laminating the heat-insulating material 20 and the cardboard 10 together passes through the cutting mechanism 3, the pressing block 31 is pressed on the upper surface of the cardboard 10 of the heat-insulating cardboard 10', and the cutting knife 32 is moved upward at the same time by the electromagnet 321 and thus pressed against the heat-insulating material 20 of the heat-insulating cardboard 10'. As the heat-insulating cardboard 10' advances horizontally, the cutting knife 32 is moved perpendicular to the moving direction of the heat-insulating cardboard 10' under the control of the electromagnet 321 in order to cut the heat-insulating cardboard 10' to the desired size.

The cutting mechanism 3 further includes a vertically movable tearing roller 33. The tearing roller 33 is located downstream of the pressing block 31 and is displaced up and down by an electromagnet 331 in order to press down on and then move away from the upper surface of the cardboard 10. In this embodiment, a bearing roller 34 is provided right below the tearing roller 33. The tearing roller 33 and the bearing roller 34 roll in opposite directions respectively and roll faster than the upper pressure roller 21 and the lower pressure roller 22 in the laminating section 2 such that the heat-insulating cardboard 10' moves at a significantly higher horizontal speed through the cutting mechanism 3 than in the laminating section 2. This arrangement is intended to accelerate the portion of the heat-insulating cardboard 10' that has moved past the cutting knife 32 so as to tear open the cut formed in the heat-insulating cardboard 10' by the cutting knife 32, wherein acceleration is achieved by the electromagnet 331 attracting the tearing roller 33 to press down on the upper surface of the cardboard 10 of that portion of the heat-insulating cardboard 10'.

The cutting mechanism 3 is further provided with a photoelectric sensor 35 on the downstream side. The photoelectric sensor 35 is used to sense whether the heat-insulating cardboard 10' has reached a position corresponding to the photoelectric sensor 35. The location of the photoelectric sensor 35 depends on the length of the heat-insulating cardboard 10' to be manufactured. When a forward end portion of the heat-insulating cardboard 10' reaches a position corresponding to the photoelectric sensor 35, the photoelectric sensor 35 sends a control signal to the electromagnet 331 and the electromagnet 321 in order for the cutting knife 32 to cut the heat-insulating cardboard 10' and for the tearing roller 33 to press down on the heat-insulating cardboard 10'.

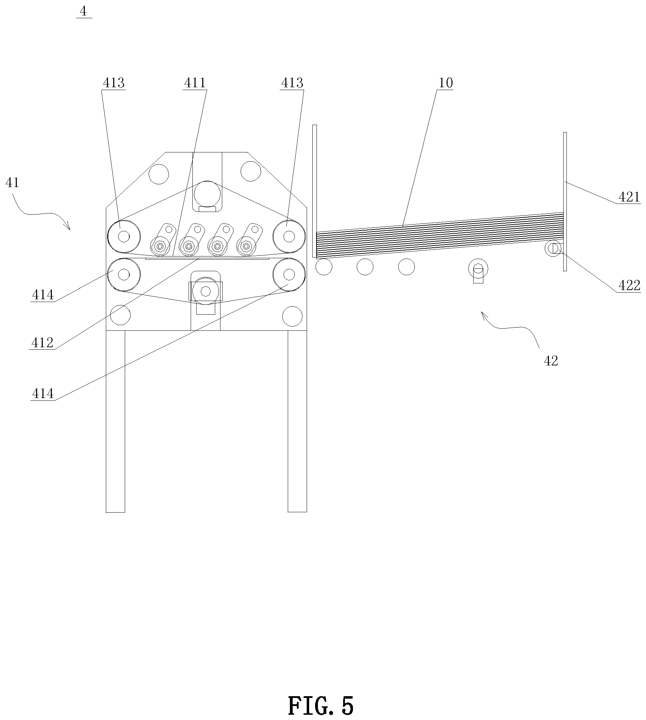

In one embodiment of the present invention as shown in FIG. 5, the heat-insulating cardboard laminating machine further includes a cardboard transport section 4. The cardboard transport section 4 is located upstream of the adhesive-applying mechanism 1 and has a transport mechanism 41. The transport mechanism 41 includes an upper transport belt 411 and a lower transport belt 412 that are vertically aligned. The cardboard 10 can be transported through the gap between the upper transport belt 411 and the lower transport belt 412 by friction with the upper transport belt 411 and with the lower transport belt 412.

In this embodiment, the upper transport belt 411 is looped around two upper rollers 413 that are horizontally provided and whose rotation drives the upper transport belt 411 into movement. Similarly, the lower transport belt 412 is looped around two lower rollers 414 that are horizontally provided and whose rotation drives the lower transport belt 412 into movement. The upper transport belt 411 and the lower transport belt 412 start conveyance of the cardboard 10.

In addition, a cardboard rack 42 is provided upstream of the transport mechanism 41. The cardboard rack 42 consists of two vertical supports 421 and a plurality of supporting rollers 422 provided between the two vertical supports 421. Plural sheets of cardboard 10 are stacked between the two vertical supports 421 and are supported by the supporting rollers 422 at a certain inclination angle. The supporting roller 422 at the end of the cardboard rack 42 that faces the transport mechanism 41 corresponds precisely to the gap between the upper transport belt 411 and the lower transport belt 412 so that the cardboard 10 can enter the transport mechanism 41 with ease.

The cardboard 10 is fed into the cardboard transport section 4 automatically. The plural sheets of cardboard 10 are stacked neatly on the cardboard rack 42 and can enter the cardboard transport section 4 one after another without having to be put into the cardboard transport section 4 manually. This arrangement increases work efficiency and reduces the labor required.

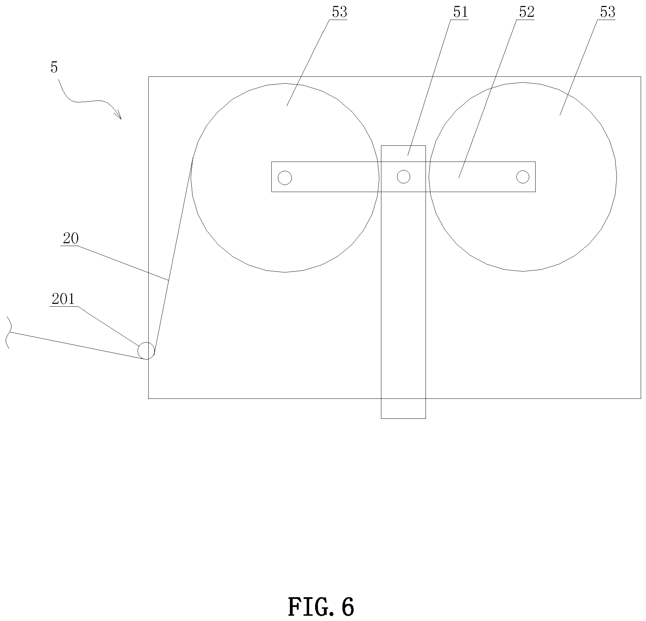

In one embodiment of the present invention as shown in FIG. 6, the heat-insulating cardboard laminating machine further includes a heat-insulating material reel rack 5 upstream of the adhesive-applying mechanism 1, or as in this embodiment, upstream of the cardboard transport section 4. The heat-insulating material reel rack 5 has a vertical stand 51. A horizontal frame 52 is rotatably connected to the upper end of the vertical stand 51, and a heat-insulating materiel reel 53 is rotatably connected to each of two opposite ends of the horizontal frame 52. The heat-insulating material 20 is wound around each of the heat-insulating material reels 53, is released from the heat-insulating material reel 53 in use, and is transported via a plurality of rollers 201 into the gap between the lower pressure roller 22 and the second adhesive-applying roller 23 of the laminating section 2. The horizontal frame 52 in the present invention is rotatable to facilitate replacement of the heat-insulating material reels 53 at the two opposite ends of the horizontal frame 52. More specifically, the spare one of the two heat-insulating material reels 53 can be prepared during manufacture of the heat-insulating cardboard 10' to eliminate downtime and increase production efficiency.

The heat-insulating cardboard laminating machine of the present invention can laminate the cardboard 10 and the heat-insulating material 20 adhesively together in a highly automated manner that increases manufacture efficiency effectively, and the heat-insulating cardboard formed by laminating the cardboard 10 and the heat-insulating material 20 together has a high yield as well as high quality.

### Embodiment 2

With continued reference to FIG. 1 to FIG. 6, the present invention also provides a heat-insulating cardboard manufacturing system that includes the foregoing heat-insulating cardboard laminating machine. In other words, the structures, working principle, and advantageous effects of the heat-insulating cardboard laminating machine in this embodiment are identical to those in embodiment 1 and therefore will not be described repeatedly.

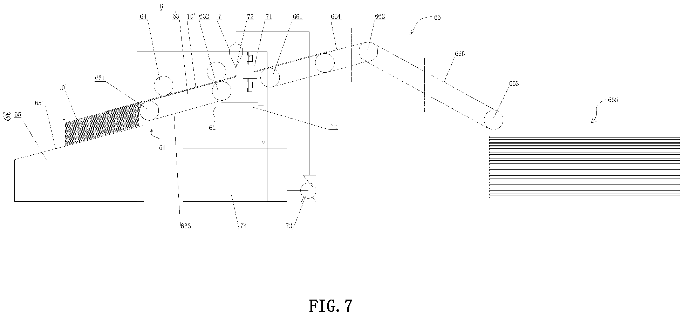

In one embodiment of the present invention as shown in FIG. 7, the heat-insulating cardboard manufacturing system further includes a coating machine downstream of the heat-insulating cardboard laminating machine. The coating machine is used to form a wax coating on the heat-insulating cardboard 10' made by laminating the heat-insulating material 20 and the cardboard 10 together. The coating machine includes a cardboard conveying mechanism 6 and a wax dispenser 7. The cardboard conveying mechanism 6 has a front end 61 and a back end 62, wherein the front end 61 is lower than the back end 62. The wax dispenser 7 is provided above the back end 62, and a wax dispensing roller 71 is provided on each of two lateral sides of the wax dispenser 7.

More specifically, the cardboard conveying mechanism 6 includes a conveyor body 63 and a plurality of pressure rollers 64. The conveyor body 63 has a front-end conveying wheel 631, a back-end conveying wheel 632, and a conveyor belt 633 looped around the front-end conveying wheel 631 and the back-end conveying wheel 632. The heat-insulating cardboard 10' is placed on the conveyor belt 633 in order to be coated. The pressure rollers 64 are provided above the conveyor body 63 in such a way that the heat-insulating cardboard 10' can be held between the conveyor belt 633 and the pressure rollers 64.

The wax dispenser 7 is located above the back end 62 of the cardboard conveying mechanism 6 and has a wax outlet 72 lying above the back-end conveying wheel 632 of the cardboard conveying mechanism 6. The wax outlet 72 of the wax dispenser 7 is a slit whose length corresponds to the width of the heat-insulating cardboard 10'. When the heat-insulating cardboard 10' is conveyed to the back-end conveying wheel 632 (i.e., when the forward edge of the cardboard 10 of the heat-insulating cardboard 10' is vertically aligned with the wax dispenser 7), with the heat-insulating material 20 of the heat-insulating cardboard 10' lying against the conveyor belt 633, the wax dispenser 7 is turned on, allowing the liquid wax in the wax dispenser 7 to curtain-coat the forward edge of the heat-insulating cardboard 10' and the upper surface of the cardboard 10 through the wax outlet 72. In the present invention, the wax dispenser 7 is connected to a wax reservoir 74 through a pump 73. The wax reservoir 74 contains liquid wax, and the pump 73 can pump the liquid wax in the wax reservoir 74 into the wax dispenser 7.

Once turned on, the front-end conveying wheel 631 and the back-end conveying wheel 632 of the cardboard conveying mechanism 6 are rotated and thereby move the heat-insulating cardboard 10' from the front end 61 to the back end 62 of the cardboard conveying mechanism 6 via the conveyor belt 633. As the front end 61 is lower than the back end 62 (i.e., the conveyor belt 633 is inclined at a certain angle), the heat-insulating cardboard 10' is conveyed slantingly upward such that the liquid wax in the wax dispenser 7 above the back end 62 falls as a curtain on the upper surface of the cardboard 10 of the heat-insulating cardboard 10' and the forward edge of the heat-insulating cardboard 10', thereby coating the upper surface of the cardboard 10 and the forward edge of the heat-insulating cardboard 10' evenly with liquid wax. It is worth mentioning that, during the conveying process, the pressure rollers 64 hold the heat-insulating cardboard 10' against the conveyor belt 633 to prevent the heat-insulating cardboard 10' from sliding off the conveyor belt 633.

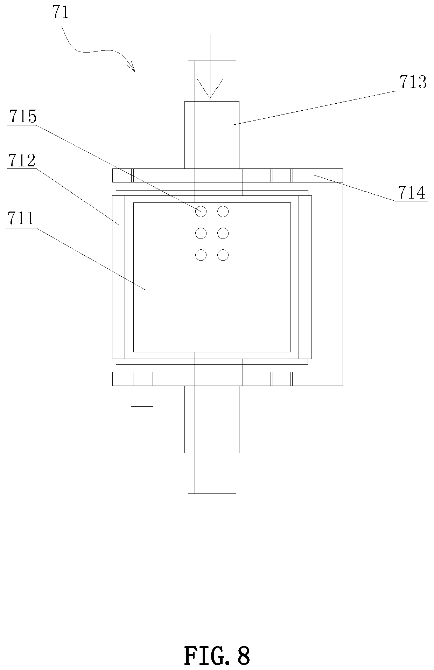

The two wax dispensing rollers 71, which are provided on the two lateral sides of the wax dispenser 7 respectively, are spaced apart by a distance equivalent to the width of the heat-insulating cardboard 10' so as to contact two lateral edges of the heat-insulating cardboard 10' respectively. In the present invention, as shown in FIG. 8, each wax dispensing roller 71 includes a roller body 711 and a felt sleeve 712. The roller body 711 has a hollow chamber in communication with the wax dispenser 7 through a connecting tube 713. The roller body 711 is also provided with a plurality of through holes 715 in communication with the hollow chamber. The felt sleeve 712 is mounted around the roller body 711.

More specifically, the wax dispensing roller 71 has a fixing frame 714. The roller body 711 is rotatably connected to the fixing frame 714 via bearings provided respectively at two ends of the roller body 711. The roller body 711 is generally cylindrical and has its upper end connected to the wax dispenser 7 through the connecting tube 713 in order for the liquid wax in the wax dispenser 7 to flow through the connecting tube 713 into the hollow chamber of the roller body 711. The through holes 715 are provided in the peripheral wall of the roller body 711 and are in communication with the hollow chamber so that the liquid wax flowing into the hollow chamber of the roller body 711 can flow through the through holes 715 to the outer surface of the roller body 711.

The felt sleeve 712 is generally cylindrical, has an inner diameter slightly larger than the outer diameter of the roller body 711, and is mounted around the outer surface of the roller body 711 so as to rotate along with the roller body 711. During rotation, the felt sleeve 712 is in contact with the outer surface of the roller body 711 and can also contact the corresponding lateral edge of the heat-insulating cardboard 10', thereby dispensing the liquid wax on the outer surface of the roller body 711 to (i.e., waxing) the corresponding lateral edge of the heat-insulating cardboard 10'.

The coating machine further includes a wax trough 75 below the wax dispenser 7 and the two wax dispensing rollers 71 in order to collect excess liquid wax flowing out of the wax dispenser 7 and the wax dispensing rollers 71. The wax trough 75 lies above the wax reservoir 74, and the liquid wax in the wax trough 75 can flow into the wax reservoir 74 through an outlet at the bottom of the wax trough 75.

In one embodiment of the present invention, the front end 61 of the cardboard conveying mechanism 6 is provided with a cardboard holder 65. The cardboard holder 65 has an inclined cardboard-supporting table 651 on which to place the heat-insulating cardboard 10' to be waxed and that facilitates conveyance of the heat-insulating cardboard 10' by giving the heat-insulating cardboard 10' the same inclination angle as the conveyor belt 633 before the heat-insulating cardboard 10' is fed into the cardboard conveying mechanism 6.

Moreover, the back end 62 of the cardboard conveying mechanism 6 is provided with a transport mechanism 66. The transport mechanism 66 includes a front-end transport wheel 661, a middle transport wheel 662, and a rear-end transport wheel 663. Both the front-end transport wheel 661 and the rear-end transport wheel 663 are lower than the middle transport wheel 662. A first transport belt 664 is looped around the front-end transport wheel 661 and the middle transport wheel 662 while a second transport belt 665 is looped around the middle transport wheel 662 and the rear-end transport wheel 663. In this embodiment, the rear-end transport wheel 663 is lower than the front-end transport wheel 661.

Once turned on, the front-end transport wheel 661, the middle transport wheel 662, and the rear-end transport wheel 663 of the transport mechanism 66 are rotated such that the first transport belt 664 receives the curtain-coated heat-insulating cardboard 10' from the cardboard conveying mechanism 6 and transports the heat-insulating cardboard 10' to the second transport belt 665, which further transports the heat-insulating cardboard 10' to a cardboard collector 666 near the rear-end transport wheel 663 to complete collection of the waxed heat-insulating cardboard 10'.

The coating machine is so designed that not only can the wax dispenser 7 coat the upper surface of the cardboard 10 of the heat-insulating cardboard 10' and the forward edge of the heat-insulating cardboard 10' evenly with wax, but also the two wax dispensing rollers 71 can wax the two lateral edges of the heat-insulating cardboard 10' respectively to ensure that the heat-insulating cardboard 10' is waterproofed as a whole. In addition to the ability to wax the entire heat-insulating cardboard 10', the coating machine features a simple structure and a high degree of automation.

The heat-insulating cardboard manufacturing system of the present invention can make and wax the heat-insulating cardboard 10'. The waxed heat-insulating cardboard 10' manufactured by the system can be used to make cardboard boxes for storing marine products and keeping the stored products fresh and safe from deterioration. Such cardboard boxes are also expected to have long service lives because of their waterproofness. It is worth mentioning, however, that the use of such cardboard boxes is not limited to storing marine products.

### Embodiment 3

The present invention further provides a heat-insulating cardboard laminating method that includes the steps of:
a) providing cardboard, and applying adhesive over the lower surface of the cardboard; and
b) providing a heat-insulating material, and bonding the heat-insulating material to the lower surface of the cardboard adhesively.

More specifically, the cardboard provided in step a has a thickness of 0.3 mm∼9 mm, and the adhesive applied over the lower surface of the cardboard has a thickness of 0.01 mm∼0.15 mm. In this embodiment, the lower surface of the cardboard may be coated with liquid adhesive or hot melt adhesive.

In step b, the heat-insulating material provided has a thickness of 1 mm∼6 mm. In one embodiment, adhesive is also applied to the surface of the heat-insulating material that is to be adhesively bonded to the lower surface of the cardboard, and this adhesive, which may be liquid adhesive or hot melt adhesive, is applied to a thickness of 0.01 mm∼0.03.

The heat-insulating cardboard laminating method of the present invention can laminate cardboard and a heat-insulating material adhesively together in an effective way that involves applying adhesive to the cardboard and/or the heat-insulating material. The resulting heat-insulating cardboard is of high quality and can be used to make cardboard boxes capable of insulating heat from the boxed marine products and thereby preventing deterioration of the boxed marine products.

The foregoing is only a number of embodiments of the present invention. A person skilled in the art may modify or change the disclosed embodiments in many ways according to the disclosure of the present specification without departing from the scope of the invention.

## Claims

1. A heat-insulating cardboard laminating machine, **characterized by** comprising:
an adhesive-applying mechanism having a cardboard-pressing roller and a first adhesive-applying roller vertically aligned with the cardboard-pressing roller, wherein the cardboard-pressing roller and the first adhesive-applying roller form a gap therebetween through which cardboard is transportable by friction with the cardboard-pressing roller and with the first adhesive-applying roller; and
a laminating section located downstream of the adhesive-applying mechanism and having an upper pressure roller and a lower pressure roller vertically aligned with the upper pressure roller, wherein the upper pressure roller and the lower pressure roller are horizontally aligned with the cardboard-pressing roller and the first adhesive-applying roller respectively, there is a second adhesive-applying roller near a lower end of the lower pressure roller, the upper pressure roller and the lower pressure roller form a gap therebetween through which the cardboard is transportable by friction with the upper pressure roller and with the lower pressure roller, the lower pressure roller and the second adhesive-applying roller form a gap therebetween through which a heat-insulating material is transportable by friction with the lower pressure roller and with the second adhesive-applying roller, and the heat-insulating material is rolled onto and adhesively bonded to a lower surface of the cardboard by the lower pressure roller.

2. The heat-insulating cardboard laminating machine of claim 1, **characterized in that** the laminating section further has an upper worm-wheel lifting mechanism, and that the upper worm-wheel lifting mechanism is connected to the upper pressure roller and comprises:
a vertical threaded rod to which an upper worm wheel is rotatably connected, wherein the vertical threaded rod penetrates two upper bearing blocks that are connected to each other, the upper worm wheel is located between the two upper bearing blocks, and the upper pressure roller has an end portion connected to the two upper bearing blocks; and
an upper horizontal threaded rod provided on a side of the upper worm wheel and connected with the upper worm wheel to enable power transmission between the upper horizontal threaded rod and the upper worm wheel, wherein the upper worm wheel drives the two upper bearing blocks into vertical movement along the vertical threaded rod according to rotation of the upper horizontal threaded rod.

3. The heat-insulating cardboard laminating machine of claim 2, **characterized in that** the lower pressure roller has an end connected with a lower worm-wheel lifting mechanism, and that the lower worm-wheel lifting mechanism is located below the upper worm-wheel lifting mechanism and comprises:
a lower worm wheel rotatably connected to the vertical threaded rod, wherein the vertical threaded rod further penetrates two lower bearing blocks that are connected to each other, the lower worm wheel is located between the two lower bearing blocks, and the lower pressure roller has an end portion connected to the two lower bearing blocks; and
a lower horizontal threaded rod provided on a side of the lower worm wheel and connected with the lower worm wheel to enable power transmission between the lower horizontal threaded rod and the lower worm wheel, wherein the lower worm wheel drives the two lower bearing blocks into vertical movement along the vertical threaded rod according to rotation of the lower horizontal threaded rod.

4. The heat-insulating cardboard laminating machine of claim 1, **characterized in that** a first adhesive trough is provided below the first adhesive-applying roller and contains liquid adhesive.

5. The heat-insulating cardboard laminating machine of claim 1, **characterized in that** a second adhesive trough is provided below the second adhesive-applying roller and contains hot melt adhesive.

6. The heat-insulating cardboard laminating machine of claim 5, **characterized in that** an electric heater is provided below the second adhesive trough, that the second adhesive trough is surrounded by a heat-conducting oil, that the electric heater heats the hot melt adhesive in the second adhesive trough through the heat-conducting oil, and that the hot melt adhesive is heated at 70°C∼200°C.

7. The heat-insulating cardboard laminating machine of claim 5, **characterized in that** the heat-insulating material is coated with a layer of the hot melt adhesive by the second adhesive-applying roller, and that the layer of the hot melt adhesive has a thickness of 0.01 mm∼0.03 mm.

8. The heat-insulating cardboard laminating machine of claim 1, **characterized by** further comprising a cutting mechanism, wherein the cutting mechanism is located downstream of the laminating section and has a pressing block and a cutting knife, the pressing block is configured to be pressed on an upper surface of the cardboard, and the cutting knife is provided below the heat-insulating material and cuts the heat-insulating material and the cardboard in a direction perpendicular to a moving direction of the cardboard according to horizontal movement of the cardboard.

9. The heat-insulating cardboard laminating machine of claim 8, **characterized in that** the cutting mechanism further comprises a vertically movable tearing roller, that the tearing roller is located downstream of the pressing block, and that once the cutting knife cuts the heat-insulating material and the cardboard, the tearing roller is pressed on the upper surface of the cardboard.

10. The heat-insulating cardboard laminating machine of claim 8, **characterized in that** a photoelectric sensor is provided downstream of the cutting mechanism.

11. The heat-insulating cardboard laminating machine of claim 1, **characterized by** further comprising a cardboard transport section, wherein the cardboard transport section is provided upstream of the adhesive-applying mechanism and has a transport mechanism, the transport mechanism has an upper transport belt and a lower transport belt vertically aligned with the upper transport belt, and the upper transport belt and the lower transport belt form a gap therebetween through which the cardboard is transportable by friction with the upper transport belt and with the lower transport belt.

12. The heat-insulating cardboard laminating machine of claim 1, **characterized by** further comprising a heat-insulating material reel rack, wherein the heat-insulating material reel rack is provided upstream of the adhesive-applying mechanism and has a vertical stand, a horizontal frame is rotatably connected to an upper end of the vertical stand, a heat-insulating material reel is rotatably connected to each of two opposite ends of the horizontal frame, and the heat-insulating material is wound around each of the heat-insulating material reels, is released from a said heat-insulating material reel in use, and is transported via a plurality of rollers into the gap between the lower pressure roller and the second adhesive-applying roller in the laminating section.

13. A heat-insulating cardboard manufacturing system, **characterized by** comprising the heat-insulating cardboard laminating machine of any of claims 1 to 12.

14. The heat-insulating cardboard manufacturing system of claim 13, **characterized by** further comprising a coating machine, wherein the coating machine is provided downstream of the heat-insulating cardboard laminating machine and comprises:
a cardboard conveying mechanism having a front end and a back end, wherein the front end is lower than the back end, and the cardboard laminated with the heat-insulating material is placed on the cardboard conveying mechanism; and
a wax dispenser provided above the back end and having two lateral sides each provided with a wax dispensing roller.

15. The heat-insulating cardboard manufacturing system of claim 14, **characterized in that** each of the wax dispensing rollers comprises:
a roller body having a hollow chamber in communication with the wax dispenser through a connecting tube, wherein the roller body is provided with a plurality of through holes in communication with the hollow chamber; and
a felt sleeve mounted around the roller body.

16. The heat-insulating cardboard manufacturing system of claim 14, **characterized in that** the coating machine further comprises a wax trough below the wax dispenser and the two wax dispensing rollers.

17. The heat-insulating cardboard manufacturing system of claim 14, **characterized in that** the back end of the cardboard conveying mechanism is provided with a transport mechanism; that the transport mechanism of the cardboard conveying mechanism comprises a front-end transport wheel, a middle transport wheel, and a rear-end transport wheel; that the front-end transport wheel and the rear-end transport wheel are lower than the middle transport wheel; and that there are a first transport belt looped around the front-end transport wheel and the middle transport wheel and a second transport belt looped around the middle transport wheel and the rear-end transport wheel.

18. The heat-insulating cardboard manufacturing system of claim 17, **characterized in that** the rear-end transport wheel is lower than the front-end transport wheel.

19. The heat-insulating cardboard manufacturing system of claim 16, **characterized in that** the coating machine further comprises a wax reservoir for storing liquid wax, and that the wax reservoir is connected to the wax dispenser through a pump and is below the wax trough.

20. A heat-insulating cardboard laminating method, **characterized by** comprising the steps of:
a) providing cardboard, and applying adhesive to a lower surface of the cardboard; and
b) providing a heat-insulating material, and bonding the heat-insulating material to the lower surface of the cardboard adhesively.

21. The heat-insulating cardboard laminating method of claim 20, **characterized in that** the step b further comprises applying adhesive to a surface of the heat-insulating material that is to be adhesively bonded to the lower surface of the cardboard.

22. The heat-insulating cardboard laminating method of claim 20, **characterized in that** the cardboard has a thickness of 0.3 mm∼9 mm.

23. The heat-insulating cardboard laminating method of claim 20, **characterized in that** the heat-insulating material has a thickness of 1 mm∼6 mm.

24. The heat-insulating cardboard laminating method of claim 20, **characterized in that** in the step a, the adhesive applied to the lower surface of the cardboard has a thickness of 0.01 mm∼0.15 mm.

25. The heat-insulating cardboard laminating method of claim 21, **characterized in that** the adhesive applied to the surface of the heat-insulating material has a thickness of 0.01 mm∼0.03 mm.

26. The heat-insulating cardboard laminating method of claim 20, **characterized in that** the adhesive applied to the lower surface of the cardboard is liquid adhesive or hot melt adhesive.

27. The heat-insulating cardboard laminating method of claim 21, **characterized in that** the adhesive applied to the surface of the heat-insulating material is liquid adhesive or hot melt adhesive, and the adhesive applied to the lower surface of the cardboard is liquid adhesive or hot melt adhesive.
